# EUROPÄISCHE PATENTSCHRIFT

(11) **EP 1 161 357 B1**
(45) Veröffentlichungstag und Bekanntmachung des Hinweises auf die Patenterteilung: **31.07.2002**
(21) Anmeldenummer: 00991989.5
(22) Anmeldetag: 13.12.2000
(51) Int. Cl.: B60G 21/055

(54) **ELEKTROMECHANISCHER STABILISATOR FÜR DAS FAHRWERK EINES FAHRZEUGES**
ELECTROMECHANICAL STABILIZER FOR A VEHICLE CHASSIS
STABILISATEUR ELECTROMECANIQUE CONCU POUR LE CHASSIS D'UN VEHICULE

(30) Priorität: 13.01.2000 DE 10001087
(43) Veröffentlichungstag der Anmeldung: 12.12.2001
(73) Patentinhaber: Bayerische Motoren Werke Aktiengesellschaft, 80809 München (DE)
(72) Erfinder: WEY, Thorsten, 85737 Ismaning (DE); VAN DER KNAAP, Albert, NL-2924 TM Krimpen aan den IJssel (NL); SCHMIDT, Roland, 82131 Stockdorf (DE)
(74) Vertreter: Schmidt, Günter, Dipl.-Ing.
(86) Internationale Anmeldenummer: EP0013396
(87) Internationale Veröffentlichungsnummer: WO0151301

(56) Entgegenhaltungen:
- DE-A- 3 604 438
- DE-A- 3 728 593
- DE-A- 19 714 565
- DE-A- 19 846 275
- US-A- 5 186 486
- PATENT ABSTRACTS OF JAPAN vol. 016, no. 191 (M-1245), 8. Mai 1992 (1992-05-08) & JP 04 027615 A (NISSAN MOTOR CO LTD), 30. Januar 1992 (1992-01-30)

## Beschreibung

Die Erfindung betrifft einen elektromechanischen Stabilisator für das Fahrwerk eines Fahrzeuges, insbesondere Kraftfahrzeuges, mit einem zwischen zwei Stabilisatorhälften eingebundenen und diese bedarfsweise gegeneinander um einen Verdrehwinkel verdrehenden Aktuator, der aus einem Elektromotor sowie einem diesem nachgeschalteten Getriebe besteht. Zum technischen Umfeld wird beispielshalber auf die DE 44 43 809 A1 verwiesen.

Mit einem Kraftfahrzeug-Fahrwerk, dessen Stabilisator in eine erste der Aufhängung des linken Rades einer Fahrzeug-Achse zugeordneten Stabilisatorhälfte und in eine zweite der Aufhängung des rechten Rades dieser Fahrzeug-Achse zugeordneten Stabilisatorhälfte unterteilt ist, und bei dem diese Stabilisatorhälften um deren gemeinsame Längsachse gegeneinander verdrehbar sind, kann gegenüber Fahrwerken mit einstückigem Stabilisator eine deutlich gesteigerte Wankstabilität erzielt werden. Dabei ist zwischen den beiden Stabilisatorhälften ein geeigneter Schwenkmotor oder allgemein Aktuator vorgesehen, der aufgrund einer geeigneten Ansteuerung diese Stabilisatorhälften bedarfsgerecht gegeneinander verdreht. Dieser Schwenkmotor oder Aktuator ist in der eingangs genannten Schrift in Form eines hydraulischen Drehantriebes ausgebildet.

Anstelle eines hydraulischen Drehantriebes kann auch ein elektromechanischer Aktuator vorgesehen werden, der einen Elektromotor und ein mechanisches Getriebe sowie eine Feststellbremse umfaßt. Dann erhält man einen sog. elektroinechanischen Stabilisator, bestehend aus den beiden beiden Stabilisatorhälften, die durch einen elektromechanischen Aktuator miteinander verbunden sind. Wie bereits geschildert dient auch dieser elektromechanische Aktuator dazu, gezielt eine Verdrehung der beiden Stabilisator-Hälften zueinander zu erreichen, damit ein gewünschtes Stabilisatormoment erzeugt wird, welches dann das Wanken des Fahrzeug-Aufbaus verhindert.

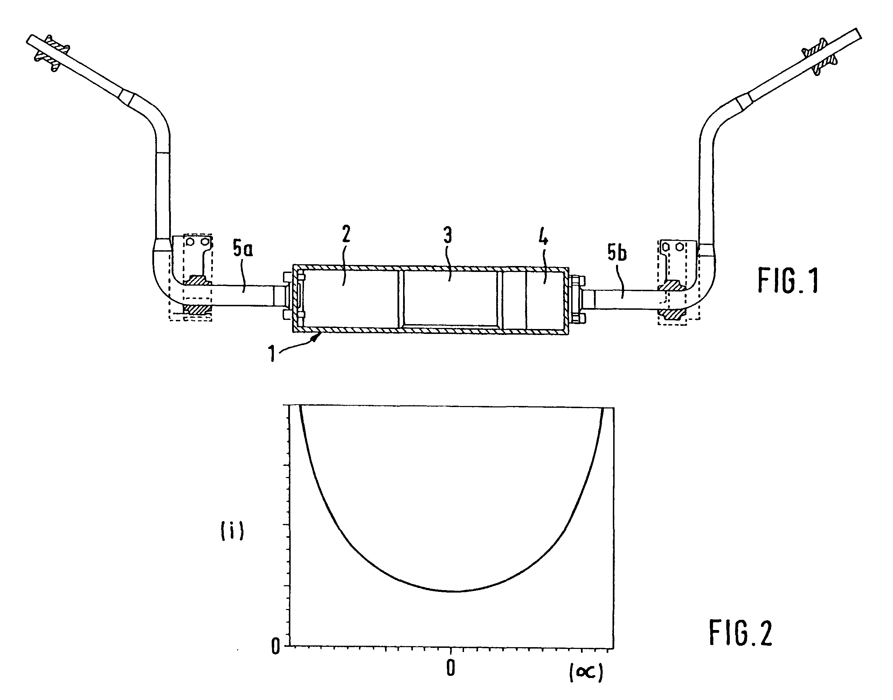

Den Stand der Technik, wie er in DE 19846275 A1 veröffentlicht und vereinfacht in der beigefügten **Figur 1** dargestellt ist, bildet ein elektromechanischer Stabilisator mit einem mit der Bezugsziffer 1 versehenen elektromechanischen Aktuator, der - wie bereits erwähnt - einen Elektromotor 2 und ein mechanisches Getriebe 3 sowie eine Feststellbremse 4 umfaßt. Die gewählte Getriebeübersetzung des bevorzugt als dreistufiges Planetengetriebe ausgeführten Getriebes 3 ist konstant. Die Dynamik des Gesamtsystems ist dabei maßgeblich durch die Getriebeübersetzung, die Massenträgheit des Systems und die Torsionssteifigkeit der beiden mit den Bezugsziffern 5a und 5b versehenen Stabilisatorhälften gekennzeichnet. Die besagte Feststellbremse 4 wird dabei benötigt, um den Elektromotor 2 vor einer Überlastung infolge hoher Stabilisatormomente zu schützen.

Elektromotore zeichnen sich üblicherweise durch hohe Drehzahlen und geringe Nennmomente aus und sind per se für den vorliegenden Anwendungsfall in einem elektromechanischen Stabilisator nicht besonders gut geeignet. Der elektromechanische Aktuator hierin sollte nämlich hohe Drehmomente bei geringen Drehwinkeln erzeugen. Für das benötigte Getriebe ergibt sich aus diesem Widerspruch zwangsläufig eine hohes Übersetzungsverhältnis, welches jedoch Nachteile mit sich bringt. So resultiert hieraus nicht nur eine große Baugröße (aufgrund der erforderlichen Planetenstufen), sondern auch ein relativ niedriger Wirkungsgrad (aufgrund der unvermeidbaren Reibungsverluste). In Abhängigkeit vom jeweiligen Anwendungsfall sind derart hohe Drehmomente am Stabilisator zu realisieren, daß die hierfür erforderlichen hohen Übersetzungsverhältnisse überhaupt nicht realisierbar sind, weil der zur Verfügung stehende Bauraum sowie der Wirkungsgrad eine physikalische Obergrenze definieren.

Weiterhin wirkt sich eine hohe Getriebeübersetzung negativ auf die Dynamik des Gesamtsystemes aus. Die Systemeigenfrequenz ist nämlich umgekehrt proportional zur Getriebe-Übersetzung. Dies resultiert aus der radbezogenen Massenträgheit, die sich aus der Aktuatorträgheit multipliziert mit dem quadrierten radbezogenem Übersetzungsverhältnis (dies ist die Beziehung zwischen dem Elektromotor-Drehwinkel und dem sich daraus ergebenden Radhub) bestimmt. Hierdurch wird Fahrkomfort und Energieverbrauch des Gesamtsystems negativ beeinflußt.

Eine Abhilfemaßnahme für diese geschilderte Problematik aufzuzeigen, ist Aufgabe der vorliegenden Erfindung.
Die Lösung dieser Aufgabe ist dadurch gekennzeichnet, daß das Getriebe ein sich in Abhängigkeit vom Verdrehwinkel veränderndes Übersetzungsverhältnis aufweist. Vorteilhafte Aus- und Weiterbildungen sind Inhalt der Unteransprüche.

Vorgeschlagen wird somit ein kontinuierlich variables Getriebe, das in Abhängigkeit vom Verdrehwinkel der Stabilisatorhälften bzw. des Aktuator-Elektromotors seine Übersetzung bevorzugt kontinuierlich verändert, d.h. daß die mathematische Verknüpfung zwischen dem Eingangsdrehwinkel des Getriebes und dessen Augangsdrehwinkel einer nichtlinearen statischen Funktion entspricht. Die Getriebeauslegung erfolgt bevorzugt derart, daß für einen Eingangswinkel von 0° ein Minimum des Übersetzungsverhältnisses erreicht wird und für große Eingangswinkel die Übersetzung gegen unendlich läuft. Ein beispielhafter Verlauf des Getriebe-Übersetzungsverhältnisses (dimensionslos und mit dem Buchstaben "i" bezeichnet) ist in der beigefügten **Figur 2** über dem Verdrehwinkel α (in Winkelgraden angegeben) in einem Diagramm aufgetragen. Wie ersichtlich sowie dem Anwendungsfall an einem Fahrwerks-Stabilisator angepaßt kann ausgehend von einer Mittellage, die dem Einganswinkel oder Verdrehwinkel α = 0° entspricht, sowohl ein positiver als auch ein negativer Verdrehwinkel zwischen den beiden Stabilisatorhälften mit einem entsprechenden Drehsinn des Elektromotors eingestellt werden.

Bei den in **Figur 2** beispielhaft angegebenen Werten für das Übersetzungsverhältnis i handelt es sich um diejenigen des erfindungsgemäß vorgesehenen variablen Getriebes. Ein von diesen Werten sich um eine Größenordnung unterscheidendes Gesamt-Übersetzungsverhältnis zwischen dem Elektromotor und den Stabilisatorhälften kann dabei in Kombination mit einer konstanten Getriebe-Vorstufe, d.h. mit einem in Reihe geschalteten Getriebe mit konstanter Übersetzung erreicht werden, so dies gewünscht bzw. erforderlich ist.

Ein erfindungsgemäß vorgesehenes sog. variables Getriebe mit einem sich in Abhängigkeit vom Drehwinkel verändernden Übersetzungsverhältnis kann in verschiedenen Bauformen realisiert werden, so bspw. als Hypocycloidgetriebe oder als Exzentergetriebe, aber auch in Form eines Stabilisators mit seitlich angebrachter Kurbel, d.h. in Form eines Kurbelgetriebes. Zur Kraftübertragung können dabei allgemein Kurbeln oder Linearführungen verwendet werden, wie auch aus den beigefügten und später beschriebenen weiteren Figurendarstellungen bevorzugter Ausführungsbeispiele der Erfindung hervorgeht.

Zunächst jedoch seien die erheblichen Vorteile erläutert, die die vorgeschlagene variable Getriebeübersetzung an einem elektromechanischen Stabilisator in den Bereichen Baugröße, Energiebedarf, Systemdynamik, sator in den Bereichen Baugröße, Energiebedarf, Systemdynamik, Funktionalität und maximal mögliche Stabilisator-Momentaufprägung bietet. Wie eingangs bereits ausgeführt wurde, müßte nämlich eine konstante Getriebeübersetzung in einem elektromechanischen Aktuator deshalb relativ hoch sein, um ein geeignet hohes Stabilisatormoment generieren zu können. Da nun bei Einsatz der vorgeschlagenen variablen Getriebeübersetzung das Übersetzungsverhältnis mit dem Verdrehwinkel steigt, können mit zunehmendem Drehwinkel nahezu beliebig große Stabilisatormomente erzeugt werden, was in extremen Einsatzfällen durchaus erwünscht sein kann. Hierfür nun benötigt ein vorgeschlagenes sog. variables Getriebe weniger Vorstufen als ein herkömmliches Getriebe mit konstantem Übersetzungsverhältnis, was offensichtlich der Baugröße der gesamten Anordnung zugute kommt, d.h. es wird weniger Bauraum benötigt.

Ferner ergeben sich große Vorteile im Energiebedarf des Gesamtsystemes. Für das Bereitstellen von hohen Drehmomenten zwischen den beiden Stabilisatorhälften muß der Elektromotor insbesondere mit einem in Anspruch 2 angegebenen Zusammenhang zwischen Verdrehwinkel und Übersetzungsverhältnis lediglich ein relativ geringes Moment aufbringen und verbraucht demzufolge wenig Energie. Wird kein besonders hohes Drehmoment zwischen den Stabilisatorhälften gefordert, so bspw. bei Geradeausfahrt des Fahrzeuges, so ist lediglich ein kleines Übersetzungsverhältnis im variablen Getriebe gefragt, so daß die auf das Rad des Fahrwerks bzw. Gesamtsystemes bezogene Masse erheblich reduziert ist. Damit muß vorteilhafterweise weniger Energie zum Erreichen der Komfortziele aufgebracht werden als bei Vorliegen einer hohen Getriebe-Übersetzung. Eine hiermit möglichst geringe Zahl von Übersetzungsstufen verbessert außerdem den Gesamt-Wirkungsgrad des Getriebes und damit die grundsätzliche Leistungsaufnahme des Gesamtsystemes.

Hingegen wird die Dynamik des Gesamtsystemes durch die vorgeschlagene variable Übersetzung vorteilhafterweise deutlich erhöht. Denn die Eigenfrequenz des Systems ist umgekehrt proportional zur Übersetzung, so daß besonders das Ansprechverhalten insbesondere in der Mittelstellung, d.h. wenn kein besonders hohes Drehmoment weder in der einen Richtung noch in der anderen Richtung gefragt ist, stark verbessert wird. Das führt zu einer deutlichen Komfortverbesserung in der Geradeausfahrt des Fahrzeuges. Diese ist gewünscht, weil in diesem Betriebzustand die Fahrzeuginsassen besonders sensibel gegenüber Fahrwerkeigenschaften sind. In der Kurvenfahrt erfolgt demgegenüber zugunsten der Belastung des Elektromotors eine Dynamikreduktion, weil das Übersetzungsverhältnis des eingesetzten variablen Getriebes ansteigt. Dies entspricht ebenfalls der gewünschten Auslegung, weil der Mensch während einer Kurvenfahrt weniger sensibel auf Komforteigenschaften reagiert als bei Geradeausfahrt eines Kraftfahrzeuges.

Zurückkommend auf die in **Figur 1** mit der Bezugsziffer 4 bezeichnete und im internen Stand der Technik vorgesehenen Feststellbremse, so kann deren Funktionalität durch ein erfindungsgemäßes variables Getriebe teilweise oder sogar vollständig ersetzt werden. Durch Erhöhen des Fahrzeug-Wankwinkels über den vom elektromechanischen Stabilisator kompensierbaren Bereich wird das Stabilisator-Drehmoment passiv vergrößert. Aufgrund des variablen Getriebes ist keine Feststellbremse notwendig, um ein unerwünschtes Weiterdrehen des Aktuators zu verhindern. Im übrigen können - wie bereits oben erläutert - aufgrund der in **Figur 2** dargestellten Übersetzungskurve deutlich höhere Stabilisatormomente als mit einer konstanten Getriebe-Übersetzung realisiert werden.

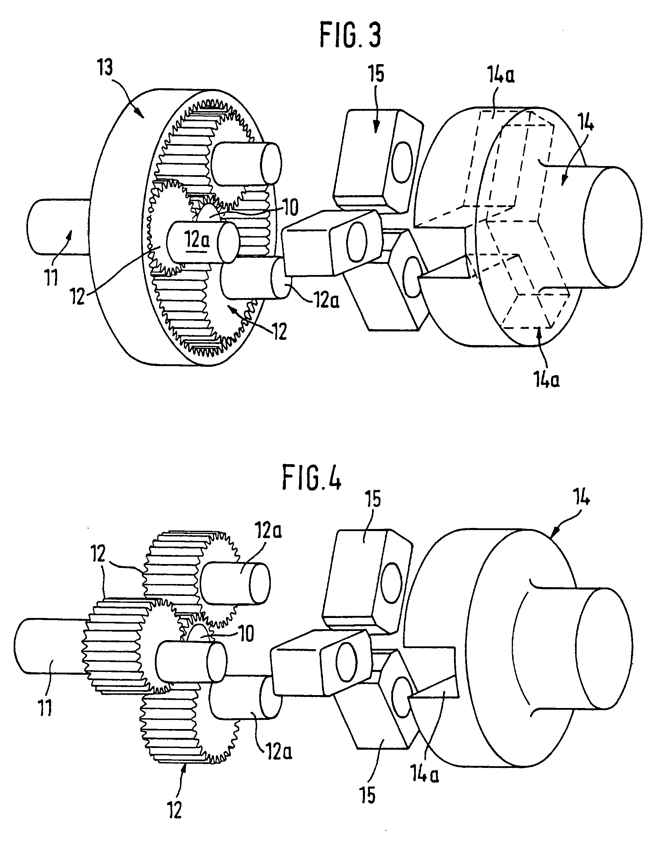

Im folgenden werden nun die in den beigefügten **Figuren 3 - 6** lediglich prinzipiell dargestellten Ausführungsformen eines erfindungsgemäßen variablen Getriebes eines elektromechanischen Aktuators 1 bzw. Stabilisators mit sich in Abhängigkeit vom Drehwinkel veränderndem Übersetzungsverhältnis erläutert. Zumeist nicht dargestellt sind hierin die beiden Stabilisatorhälften 5a, 5b sowie der Elektromotor 2 (vgl. hierzu **Fig.1**) des Aktuators 1; ferner ist eine ggf. vorzusehende und bereits erläuterte in Reihe geschaltete Getriebestufe mit konstanter Übersetzung (zur Erzielung eines gewünschten Gesamt-Übersetzungsverhältnisses) auch nicht dargestellt.

**Figur 3** zeigt ein Hypocycloidgetriebe mit Linearführungen in perpektivischer Explosionsdarstellung. Wie in einem Planetengetriebe ist ein Sonnenrad 10 vorgesehen, dessen Antriebswelle 11 mit dem Elektromotor (2) ggf. über die weitere Getriebestufe mit konstanter Übersetzung verbunden ist. Die Planetenräder 12 weisen wie ersichtlich exzentrisch angeordnete Bolzen 12a auf und sind vom Hohlrad 13 geführt, welches drehfest mit einer der beiden Stabilisatorhälften (5a oder 5b) verbunden ist.
Mit der anderen Stabilisatorhälfte (5b oder 5a) ist das Abtriebselement 14 dieses Hypocycloidgetriebes drehfest verbunden, in welchem ebensoviele Gleitsteinführungen 14a vorgesehen sind, als Planetenräder 12 vorhanden sind. In jeder Gleitsteinführung 14a ist ein Gleitstein 15 gelagert, der eine Aufnahme für einen Bolzen 12a des zugeordneten Planetenrades 12 aufweist.

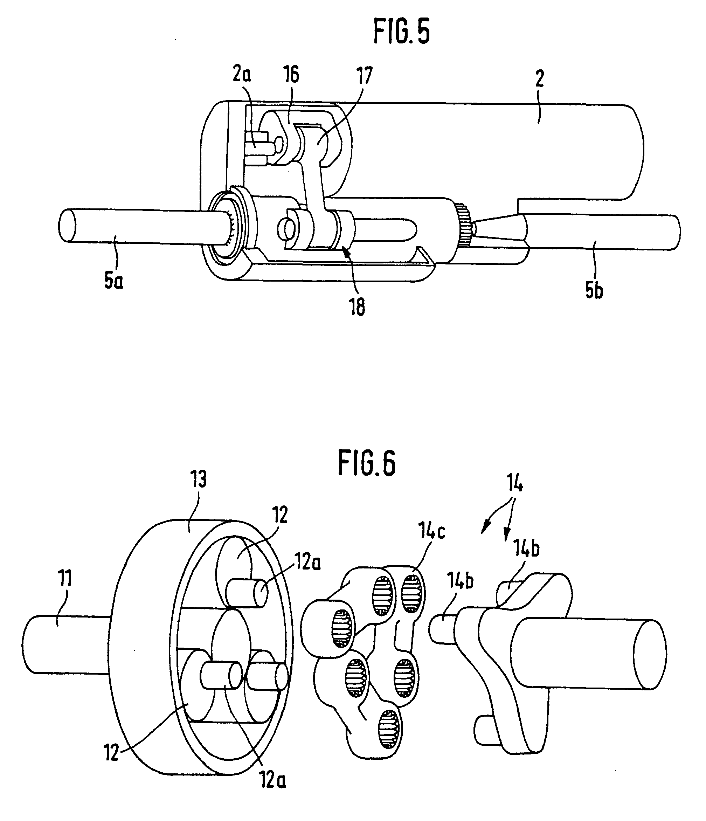

**Figur 6** zeigt ein Hypocycloidgetriebe mit einer Kurbel in perspektivischer und gegenüber Figur 3 vereinfachter Explosionsdarstellung. Auch hier ist das Sonnenrad 10 mit seiner Antriebswelle 11 mit dem Elektromotor (2) verbunden, während das Hohlrad 13 drehfest mit einer der beiden Stabilisatorhälften (5a oder 5b) verbunden ist. Mit der anderen Stabilisatorhälfte (5b oder 5a) ist das Abtriebselement 14 dieses Hypocycloidgetriebes drehfest verbunden, das mit Kurbelzapfen 14b versehen ist, die drei Pleuel 14c tragen, die ihrerseits Aufnahmen für die bereits genannten exzentrischen Bolzen 12a der Planetenräder 12 aufweisen.

**Figur 4** zeigt ein Exzentergetriebe mit Linearführungen in perpektivischer Explosionsdarstellung. Wie in einem Planetengetriebe ist auch hier ein Sonnenrad 10 vorgesehen, dessen Antriebswelle 11 mit dem Elektromotor (2) ggf. über die weitere Getriebestufe mit konstanter Übersetzung verbunden ist. Die Planetenräder 12 weisen abermals wie ersichtlich exzentrisch angeordnete Bolzen 12a auf, wobei die Drehachsen der Planetenräder auf hier der Einfachheit halber nicht dargestellte Weise zu einem (nicht gezeigten) Wellenzapfen zusammengefasst sind, der drehfest mit einer der beiden Stabilisatorhälften (5a oder 5b) verbunden ist. Die Abtriebsseite dieses Getriebes ist analog Figur 3 gestaltet, d.h. das Abtriebselement 14 dieses Exzentergetriebes ist mit der anderen Stabilisatorhälfte (5b oder 5a) drehfest verbunden, wobei in diesem Abtriebselement 14 ebensoviele Gleitsteinführungen 14a vorgesehen sind, als Planetenräder 12 vorhanden sind. In jeder Gleitsteinführung 14a ist ein Gleitstein 15 gelagert, der eine Aufnahme für einen Bolzen 12a des zugeordneten Planetenrades 12 aufweist.

**Figur 5** zeigt ein Kurbelgetriebe, das aus einer Kurbel 16, einem an dieser angelenkten Pleuel 17 sowie aus einer hiermit gelenkig verbundenen, hier zylinderförmigen Schwinge 18 besteht. Letztere ist drehfest mit der hier linken Stabilisatorhälfte 5a verbunden, während die (hier rechte) Stabilisatorhälfte 5b drehfest am Gehäuse des Elektromotors 2 befestigt ist. Dessen Drehachse 2a ist drehfest mit der Kurbel 16 verbunden, so daß bei einer Drehbewegung der Elektromotor-Drehachse 2a die beiden Stabilisatorhälfteb 5a, 5b in gewünschter Weise mit einem sich in Abhängigkeit vom Verdrehwinkel (α; vgl. Fig.2) verändernden Übersetzungsverhältnis (i) gegeneinander verdreht werden.

Die hier lediglich beispielhaft dargestellten und erläuterten Getriebe haben unterschiedliche Abhängigkeiten zwischen dem Verdrehwinkel und dem jeweils aktuellen Übersetzungsverhältnis. In Abhängigkeit vom konkreten Anwendungsfall kann unter Berücksichtigung weiterer Randbedingungen (wie Bauaufwand, Dauerfestigkeit, etc.) ein jeweils geeignetes Getriebe ausgewählt werden. Daneben sind selbstverständlich weitere Getriebe-Ausführungsformen möglich, die hier nicht erläutert wurden, wie überhaupt eine Vielzahl von Details insbesondere konstruktiver Art durchaus abweichend von den gezeigten Ausführungsbeispieles gestaltet sein kann, ohne den Inhalt der Patentansprüche zu verlassen. Wesentlich ist stets, daß für den beanspruchten Anwendungsfall ein Getriebe zum Einsatz kommt, welches ein sich in Abhängigkeit vom Verdrehwinkel veränderndes Übersetzungsverhältnis aufweist.

### Bezugszeichenliste:

- 1: Aktuator
- 2: Elektromotor
- 2a: Drehachse (von 2)
- 3: Getriebe
- 4: Feststellbremse
- 5a,b: Stabilisator-Hälfte(n)
- 10: Sonnenrad
- 11: Antriebswelle von 10
- 12: Planetenrad
- 12a: Bolzen (an 12 exzentrisch angeordnet)
- 13: Hohlrad
- 14: Abtriebselement
- 14a: Gleitsteinführung
- 14b: Kurbelzapfen
- 14c: Pleuel
- 15: Gleitstein
- 16: Kurbel
- 17: Pleuel
- 18: Schwinge

## Patentansprüche

1. Elektromechanischer Stabilisator für das Fahrwerk eines Fahrzeuges, insbesondere Kraftfahrzeuges, mit einem zwischen zwei Stabilisatorhälften (5a, 5b) eingebundenen und diese bedarfsweise gegeneinander um einen Verdrehwinkel verdrehenden Aktuator (1), der aus einem Elektromotor (2) sowie einem diesem nachgeschalteten Getriebe (3) besteht,
**dadurch gekennzeichnet, daß** das Getriebe (3) ein sich in Abhängigkeit vom Verdrehwinkel (α) veränderndes Übersetzungsverhältnis (i) aufweist.

2. Elektromechanischer Stabilisator nach Anspruch 1,
**gekennzeichnet durch** eine derart ausgelegtes Getriebe (3), daß sich in der Neutralposition (α = 0°) bei nicht gegeneinander verdrehten Stabilisatorhälften (5a, 5b) das kleinstmögliche Übersetzungsverhältnis ergibt, und daß sich dieses für große Verdrehwinkel in Richtung "unendlich" verschiebt.

3. Elektromechanischer Stabilisator nach Anspruch 1 oder 2,
**dadurch gekennzeichnet, daß** dem ein variables Übersetzungsverhältnis aufweisenden Getriebe (3) eine Getriebestufe mit konstanter Übersetzung in Reihe geschaltet ist.

4. Elektromechanischer Stabilisator nach einem der Ansprüche 1- 3,
**dadurch gekennzeichnet, daß** das ein variables Übersetzungsverhältnis aufweisendes Getriebe als Hypocycloidgetriebe mit Linearführungen oder Kurbel oder als Exzentergetriebe ausgebildet ist.

5. Elektromechanischer Stabilisator nach einem der Ansprüche 1 - 3,
**dadurch gekennzeichnet, daß** das ein variables Übersetzungsverhältnis aufweisendes Getriebe als Kurbelgetriebe ausgebildet ist.

## Claims

1. An electromechanical stabiliser for the chassis of a vehicle, especially of a motor vehicle, with an actuator (1), which comprises an electric motor (2) and a gearbox (3) connected to it, connected between two stabiliser halves (5a, 5b) and when needed it can rotate these with respect to each other about a rotation angle,
**characterised in that** the gearbox (3) has a transmission ratio (i) which changes depending on the rotation angle (α).

2. An electromechanical stabiliser according to Claim 1,
**characterised by** a gearbox (3) which is so designed that in the neutral position (α = 0) with the stabiliser halves (5a, 5b) not twisted against each other, the smallest possible transmission ratio results, and that this moves towards "infinity" for large twisting angles.

3. An electromechanical stabiliser according to Claim 1 or Claim 2,
**characterised in that** a gearbox stage with constant transmission ratio is connected in series with the variable transmission ratio gearbox (3).

4. An electromechanical stabiliser according to one of the Claims 1 to 3,
**characterised in that** the gearbox with variable transmission ratio is constructed as a hypocycloid drive with linear guides or cranks or as an eccentric drive.

5. An electromechanical stabiliser according to one of the Claims 1 to 3,
**characterised in that** the gearbox with variable transmission ratio is constructed as a cranked drive.

## Revendications

1. Stabilisateur électromécanique pour le châssis d'un véhicule notamment d'un véhicule automobile, comportant un actionneur (1) installé entre deux moitiés de stabilisateur (5a, 5b) et qui fait tourner ces moitiés l'une par rapport à l'autre d'un angle de rotation souhaité, cet actionneur se composant d'un moteur électrique (2) et d'une transmission (3) en sortie de moteur,
**caractérisé en ce que**
la transmission (3) a un rapport de démultiplication (i) variant en fonction de l'angle de rotation (α).

2. Stabilisateur électromécanique selon la revendication 1,
**caractérisé par**
une transmission (3) conçue pour qu'en position neutre (α = 0°) lorsque les moitiés de stabilisateur (5a, 5b) ne sont pas tournées l'une par rapport à l'autre, le rapport de démultiplication soit le plus petit possible, et ce rapport se déplace en direction de l'infini pour des grands angles de rotation.

3. Stabilisateur électromécanique selon l'une quelconque des revendications 1 ou 2,
**caractérisé en ce qu'**
en série avec la transmission (3) à rapport de démultiplication variable est associé un niveau de transmission à rapport de transmission constant.

4. Stabilisateur électromécanique selon l'une quelconque des revendications 1 à 3,
**caractérisé en ce que**
la transmission à rapport de démultiplication variable est une transmission hypocycloïdale avec guidage linéaire ou manivelle, ou une transmission excentrée.

5. Stabilisateur électromécanique selon l'une quelconque des revendications 1 à 3,
**caractérisé en ce que**
la transmission à rapport de démultiplication variable est une transmission à manivelle.
